(19) Europäisches Patentamt
European Patent Office
Office européen des brevets

(11) EP 2 738 957 A1

(12) **EUROPEAN PATENT APPLICATION**

(43) Date of publication:
04.06.2014 Bulletin 2014/23

(51) Int Cl.:
H04B 10/50 (2013.01)     H04B 10/516 (2013.01)

(21) Application number: 13184733.7

(22) Date of filing: 17.09.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.11.2012 JP 2012261683

(71) Applicant: FUJITSU LIMITED
Kawasaki-shi,
Kanagawa 211-8588 (JP)

(72) Inventors:
• Watanabe, Shigeki
  Kanagawa, 211-8588 (JP)
• Kato, Tomoyuki
  Kanagawa, 211-8588 (JP)

(74) Representative: HOFFMANN EITLE
Patent- und Rechtsanwälte
Arabellastrasse 4
81925 München (DE)

(54) **Optical signal processing apparatus and optical signal processing method**

(57) An optical signal processing apparatus (1) includes a mixer (13) and a first optical modulator (11). The mixer modulates a carrier signal of a first specific frequency ($f_j$) received from a first oscillator (12) with an information signal ($B_j$) to generate a subcarrier modulated signal ($S_j$). The first optical modulator (11) optically modulates, with the subcarrier modulated signal received from the mixer, carrier light ($E_0$) optically modulated by a second optical modulator (16) at a second specific frequency ($f_0$) received from a second oscillator (15) to generate and output modulated carrier light ($E_0'$).

FIG.1

**Description**

FIELD

The embodiments discussed herein are related to an optical signal processing apparatus and an optical signal processing method.

BACKGROUND

Optical networks use an optical signal processing apparatus, such as a relay optical node arranged at a point away from a terminal apparatus, based on a conventional optical network, for example. Optical networks perform processing, such as demultiplexing, add and drop, wavelength conversion, and switching, on signal light, thereby relaying information. Transmitting and processing the information without performing optoelectric conversion is effective to improve the energy efficiency.

A conventional optical signal processing apparatus, however, performs signal processing after carrying out optoelectric conversion similarly to a terminal apparatus. The optical signal processing apparatus, for example, temporarily converts received signal light into an electrical signal, performs electrical signal processing on the electrical signal thus converted, and converts the electrical signal into an optical signal again. As a result, the optical signal processing apparatus has a complicated configuration and consumes electric power to compensate for a power loss due to the optoelectric conversion.

To add and transmit information over an optical network, for example, the optical network temporarily collects the information at relay optical nodes and terminal apparatuses arranged at a plurality of points and transmits the information using dedicated light waves for each piece of information. For this reason, the optical network needs to secure a large number of wavelengths.

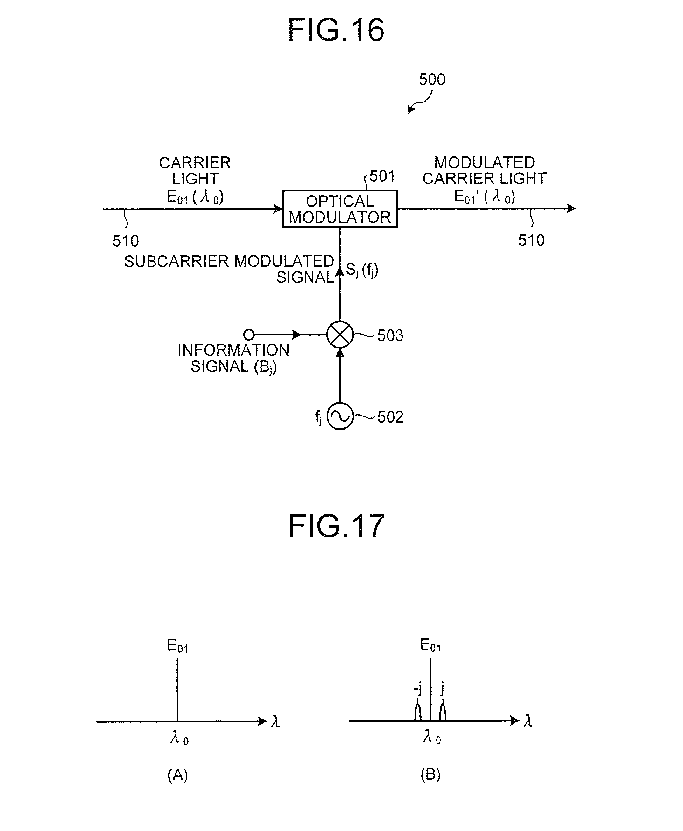

To address this, there has been developed an optical signal processing apparatus that reduces the number of times of optoelectric conversion in transmission of a plurality of pieces of information over an optical network and multiplexes the pieces of information with single-wavelength carrier light traveling through the optical network to transmit the pieces of information. FIG. 16 is an example view for explaining the optical signal processing apparatus.

An optical signal processing apparatus 500 illustrated in FIG. 16 is arranged at an arbitrary point on an optical fiber 510. The optical signal processing apparatus 500 includes an optical modulator 501, an oscillator 502, and a mixer 503. The optical signal processing apparatus 500 is arranged at the j-th point among a plurality of arrangement points on the optical fiber 510 in the optical network, for example. The optical modulator 501 optically modulates carrier light $E_{01}$ of a wavelength $\lambda_0$ received from the optical fiber 510, thereby generating modulated carrier light $E_{01}'$. The optical modulator 501 then outputs the modulated carrier light $E_{01}'$ thus generated to the optical fiber 510. The carrier light $E_{01}$ is continuous wave (CW) light transmitted through the optical fiber 510.

The oscillator 502 oscillates and outputs a carrier signal $f_j$ of a radio frequency (RF), for example. If the mixer 503 receives the carrier signal $f_j$ supplied from the oscillator 502 and an information signal $B_j$ to be multiplexed with the carrier light $E_{01}$, the mixer 503 modulates the carrier signal $f_j$ with the information signal $B_j$, thereby generating a subcarrier modulated signal $S_j(f_j)$. The mixer 503 then outputs the subcarrier modulated signal $S_j(f_j)$ thus generated to the optical modulator 501. The optical modulator 501 optically modulates the carrier light $E_{01}$ of the wavelength $\lambda_0$ with the subcarrier modulated signal $S_j(f_j)$, thereby generating the modulated carrier light $E_{01}'$. The optical modulator 501 then outputs the modulated carrier light $E_{01}'$ thus generated to the optical fiber 510.

FIG. 17 is an example view for explaining a spectrum of the carrier light $E_{01}$ in the optical signal processing apparatus 500 illustrated in FIG. 16. The spectrum illustrated in FIG. 17(A) is a spectrum of the carrier light $E_{01}$ at the input stage of the optical modulator 501. The spectrum illustrated in FIG. 17(B) is a spectrum of the modulated carrier light $E_{01}'$ at the output stage of the optical modulator 501. Subcarrier modulated signals are generated in a double side band ($E_{01} \pm j$) detuned from the carrier light $E_{01}$ by $\pm f_j$ corresponding to the carrier signal. A receiver that receives the modulated carrier light $E_{01}'$ receives one or both of the subcarrier modulated signals generated in the double side band ($E_{01} \pm j$) ranging with respect to the carrier light $E_{01}$ from the modulated carrier light $E_{01}'$.

Patent Document 1: International Publication Pamphlet No. WO 2011/052075

Patent Document 2: Japanese Laid-open Patent Publication No. 2011-215603.

In the optical signal processing apparatus 500, however, using a fixed value for the wavelength (frequency) of the carrier light $E_{01}$ restricts the frequency at which the subcarrier modulated signal is generated to the double side band ($E_{01} \pm j$) ranging with respect to the carrier light $E_{01}$. This restricts the frequency band at which the subcarrier modulated signal is generated. To change the frequency band at which the subcarrier modulated signal is generated, complicated processing needs to be performed, such as changing the wavelength (frequency) of the carrier light $E_{01}$. Furthermore, in modulation of a signal by using a different subcarrier frequency or in reception of a subcarrier modulated signal of the carrier light $E_{01}$, it is difficult to use a frequency band that is most suitable for the modulator and the receiver.

Accordingly, it is an object in one aspect of an embodiment of the invention to provide an optical signal processing apparatus and an optical signal processing method that can optionally set a frequency at which a subcarrier modulated signal is generated.

SUMMARY

According to an aspect of an embodiment, an optical signal processing apparatus includes a generating unit and an optical modulation unit. The generating unit modulates a carrier signal of a first specific frequency with an information signal to generate a subcarrier modulated signal. The optical modulation unit includes an optical modulation medium. The optical modulation unit optically modulates, with the subcarrier modulated signal, carrier light optically modulated at a second specific frequency to generate and output modulated carrier light.

BRIEF DESCRIPTION OF DRAWINGS

FIG. 1 is an example view for explaining an optical signal processing apparatus according to a first embodiment;
FIG. 2 is an example view for explaining a spectrum of carrier light;
FIG. 3 is an example view for explaining a method for adjusting a frequency at which a subcarrier modulated signal is generated;
FIG. 4 is an example view for explaining an optical signal processing apparatus according to a second embodiment;
FIG. 5 is an example view for explaining an optical signal processing apparatus according to a third embodiment;
FIG. 6 is an example view for explaining an optical signal processing apparatus according to a fourth embodiment;
FIG. 7 is an example view for explaining an optical signal processing apparatus according to a fifth embodiment;
FIG. 8 is an example view for explaining an optical signal processing apparatus according to a sixth embodiment;
FIG. 9 is an example view for explaining an optical signal processing apparatus according to a seventh embodiment;
FIG. 10 is an example view for explaining an optical network according to an eighth embodiment;
FIG. 11 is an example view for explaining an optical network according to a ninth embodiment;
FIG. 12 is an example view for explaining a receiver according to a tenth embodiment;
FIG. 13 is an example view for explaining a receiver according to an eleventh embodiment;
FIG. 14 is an example view for explaining a receiver according to a twelfth embodiment;
FIG. 15 is an example view for explaining an optical signal processing apparatus according to a thirteenth embodiment;
FIG. 16 is an example view for explaining an optical signal processing apparatus; and
FIG. 17 is an example view for explaining a spectrum of carrier light in the optical signal processing apparatus illustrated in FIG. 16.

DESCRIPTION OF EMBODIMENTS

Preferred embodiments of the present invention will be explained with reference to accompanying drawings. The embodiments are not intended to limit the disclosed technology. The embodiments described below may be combined appropriately as long as no inconsistency occurs.

[a] First Embodiment

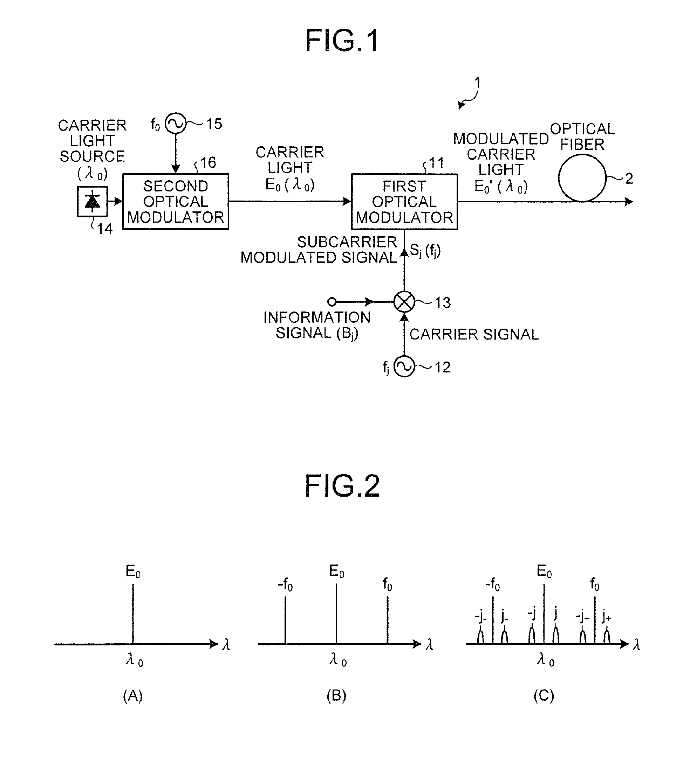

FIG. 1 is an example view for explaining an optical signal processing apparatus according to a first embodiment. An optical signal processing apparatus 1 illustrated in FIG. 1 includes a first optical modulator 11, a first oscillator 12, a mixer 13, a carrier light source 14, a second oscillator 15, and a second optical modulator 16.

The first oscillator 12 can oscillate a desired frequency. The first oscillator 12, for example, oscillates and outputs a carrier signal $f_j$ of a radio frequency (RF), which is a first specific frequency. The first specific frequency is allocated to each information signal $B_j$. The information signal $B_j$ is information to be transmitted. If the mixer 13 receives the carrier signal $f_j$ supplied from the first oscillator 12 and the information signal $B_j$, the mixer 13 modulates the carrier signal $f_j$ with the information signal $B_j$, thereby generating a subcarrier modulated signal $S_j(f_j)$. The mixer 13 then outputs the subcarrier modulated signal $S_j(f_j)$ thus generated to the first optical modulator 11. The subcarrier modulated signal $S_j(f_j)$ may be either an electrical or optical signal.

The carrier light source 14 is a laser diode, for example, and outputs carrier light $E_0$ of a wavelength $\lambda_0$, such as continuous wave (CW) light. The second oscillator 15 can oscillate a desired frequency and oscillates and outputs a second specific frequency $f_0$. The second optical modulator 16 optically modulates the carrier light $E_0$ of the wavelength

$\lambda_0$ at the second specific frequency $f_0$. The second optical modulator 16 then outputs the carrier light $E_0$ optically modulated at the second specific frequency $f_0$ to the first optical modulator 11. The second optical modulator 16 is a modulator, such as an optical intensity modulator and an optical phase modulator.

The first optical modulator 11 optically modulates the carrier light $E_0$ of the wavelength $\lambda_0$ with the subcarrier modulated signal $S_j(f_j)$, thereby generating modulated carrier light $E_0'$. The first optical modulator 11 then outputs the modulated carrier light $E_0'$ thus generated to an optical fiber 2. The first optical modulator 11 optically modulates the carrier light $E_0$ with the subcarrier modulated signal $S_j(f_j)$ in this manner, thereby multiplexing the information signal $B_j$ with the carrier light $E_0$. The first optical modulator 11 then transmits the information signal $B_j$ from an arbitrary point in the optical network to the optical fiber 2. The first optical modulator 11 is a modulator, such as an optical phase modulator and an optical intensity modulator.

FIG. 2 is an example view for explaining a spectrum of the carrier light $E_0$. The spectrum illustrated in FIG. 2(A) is a spectrum of the carrier light $E_0$ of the wavelength $\lambda_0$ output from the carrier light source 14. The spectrum illustrated in FIG. 2(B) is a spectrum of the carrier light $E_0$ obtained by optically modulating the carrier light $E_0$ of the wavelength $\lambda_0$ at the second specific frequency $f_0$. In the case of FIG. 2(B), first double side band components ($\pm f_0$) are generated in the spectrum. The first double side band components are detuned from a main carrier of the wavelength $\lambda_0$ of the carrier light $E_0$ by wavelengths $\pm f_0$ corresponding to the second specific frequency. Furthermore, second, third, and higher-order modulated components ($\pm 2f_0, \pm 3f_0, ...$) are also generated. The intensity of these higher-order components, however, is lower than that of the first double side band under an operation condition with a relatively low modulation index as in the present invention. Thus, description of these higher-order components is omitted.

The spectrum illustrated in FIG. 2(C) is a spectrum of the modulated carrier light $E_0'$ obtained by further optically modulating, with the subcarrier modulated signal $S_j(f_j)$, the carrier light $E_0$ optically modulated at the second specific frequency $f_0$. In the spectrum of the modulated carrier light $E_0'$, subcarrier modulated signals $\pm j$ are generated in the respective first double side band components detuned from the main carrier of the carrier light $E_0$ by frequencies $\pm f_0$ corresponding to the second specific frequency besides in the double side band of the main carrier $E_0$. In other words, the optical signal processing apparatus 1 generates two subcarrier modulated signals in the double side band of the main carrier and further generates two subcarrier modulated signals in the respective two first double side band components. Thus, six subcarrier modulated signals in total are generated in each frequency band.

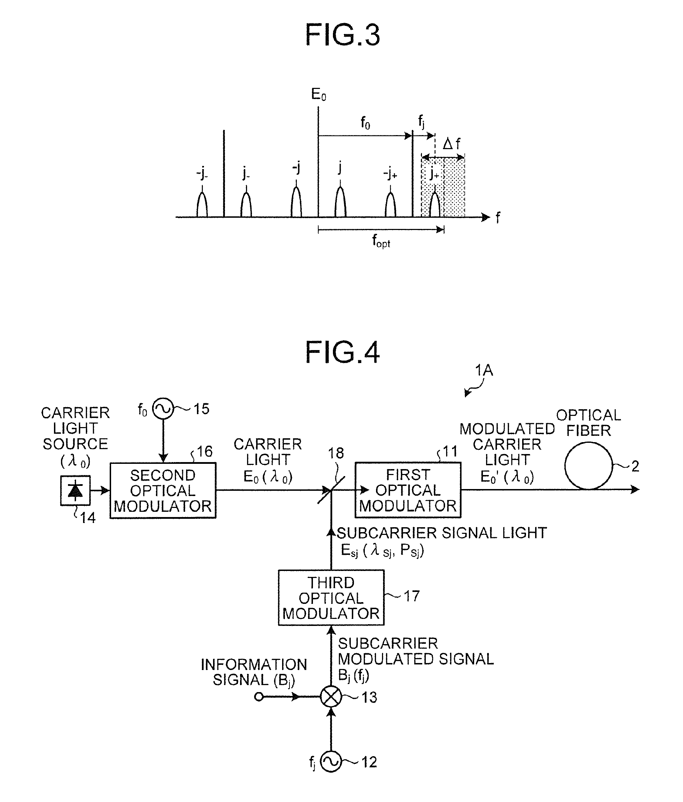

The following describes a method for setting the second specific frequency $f_0$ at which the carrier light $E_0$ is optically modulated by the second optical modulator 16 so as to generate the subcarrier modulated signal of the modulated carrier light $E_0'$ in a desired frequency band. FIG. 3 is an example view for explaining a desired frequency band in the spectrum of the modulated carrier light $E_0'$. In the spectrum of FIG. 3, the range of the frequency $f_j$ of the subcarrier modulated signal in the desired frequency band is expressed by Equation (1) where $f_{opt}$ represents a center frequency of the desired frequency band, $\Delta f$ represents a bandwidth of the desired frequency band, and $f_j$ represents a frequency of the subcarrier modulated signal in the frequency band detuned from the carrier light $E_0$ by $\pm f_0$ corresponding to the second specific frequency.

$$\left| f_o + f_{opt} \right| - \frac{\Delta f}{2} \leq f_j \leq \left| f_o - f_{opt} \right| + \frac{\Delta f}{2} \tag{1}$$

The frequency $f_j$ of the subcarrier modulated signal falls within a double side band $f_0 \pm f_j$ of the sub-signal detuned from the main carrier of the carrier light $E_0$ by $f_0$ corresponding to the second specific frequency. As a result, adjusting the second specific frequency $f_0$ enables the optical signal processing apparatus 1 serving as a transmitter to set a frequency at which the subcarrier modulated signal is generated to the desired frequency band. The method is effectively used in the following cases: the case where a modulation circuit of an optical signal processing apparatus serving as a relay optical node and a demodulation circuit of an optical signal processing apparatus serving as a receiver achieve high performance at around $f_{opt}$ or the production cost thereof is low; and the case where the frequency characteristics of the first optical modulator 11 is excellent at around $f_{opt}$, for example.

In the modulated carrier light $E_0'$, the subcarrier modulated signals are generated in the first double side band detuned from the main carrier by $\pm f_0$ corresponding to the second specific frequency besides in the double side band of the carrier light $E_0$.

Adjusting the second specific frequency $f_0$ enables the optical signal processing apparatus 1 according to the first embodiment to generate the subcarrier modulated signals in the first double side band detuned from the main carrier by $\pm f_0$ corresponding to the second specific frequency besides in the double side band of the carrier light $E_0$. Thus, adjusting the second specific frequency $f_0$ enables the optical signal processing apparatus 1 to optionally set an arbitrary frequency band suitable for conditions for receiving the subcarrier modulated signal besides a frequency band around

the carrier light $E_0$.

In the first embodiment, the explanation has been made of the case where the subcarrier modulated signal supplied to the first optical modulator 11 may be either an electrical or optical signal. The following describes an optical signal processing apparatus according to a second embodiment in which the subcarrier modulated signal is an optical signal.

[b] Second Embodiment

FIG. 4 is an example view for explaining an optical signal processing apparatus 1A according to the second embodiment. Components similar to those in the optical signal processing apparatus 1 illustrated in FIG. 1 are denoted by like reference numerals, and overlapping explanation of the configuration and the operation will be omitted. The optical signal processing apparatus 1A illustrated in FIG. 4 includes a third optical modulator 17 and a multiplexer 18 besides a first optical modulator 11, a first oscillator 12, a mixer 13, a carrier light source 14, a second oscillator 15, and a second optical modulator 16. The mixer 13 modulates a carrier signal $f_j$ with an information signal $B_j$, thereby generating a subcarrier modulated signal $B_j(f_j)$, which is an electrical signal. The third optical modulator 17 optically modulates the subcarrier modulated signal $B_j(f_j)$ received from the mixer 13, thereby generating subcarrier signal light $E_{sj}$. The optical intensity of the subcarrier signal light $E_{sj}$ is represented by $P_{sj}$, and the wavelength thereof is represented by $\lambda_{sj}$. The wavelength $\lambda_{sj}$ of the subcarrier signal light $E_{sj}$ is different from the wavelength $\lambda_0$ of the carrier light $E_0$.

The third optical modulator 17 inputs the signal light $E_{sj}$ thus generated to the multiplexer 18. The multiplexer 18 multiplexes the carrier light $E_0$ and the subcarrier signal light $E_{sj}$ and outputs the light thus multiplexed to the first optical modulator 11. The first optical modulator 11 optically modulates the carrier light $E_0$ with the subcarrier signal light $E_{sj}$, thereby generating modulated carrier light $E_0'$. The first optical modulator 11 then outputs the modulated carrier light $E_0'$ thus generated to an optical fiber 2.

In the modulated carrier light $E_0'$, the subcarrier signal light $E_{sj}$ is generated in the first double side band detuned from the main carrier of the carrier light $E_0$ by $\pm f_0$ corresponding to a second specific frequency besides in the double side band of the main carrier.

Adjusting the second specific frequency $f_0$ enables the optical signal processing apparatus 1A according to the second embodiment to generate the subcarrier signal light $E_{sj}$ in the first double side band detuned from the main carrier of the carrier light $E_0$ by $\pm f_0$ corresponding to the second specific frequency besides in the double side band of the main carrier. Thus, adjusting the second specific frequency $f_0$ enables the optical signal processing apparatus 1A to optionally set an arbitrary frequency band suitable for conditions for receiving the subcarrier signal light $E_{sj}$ besides a frequency band around the carrier light $E_0$.

While the first embodiment uses the first optical modulator 11 to optically modulate the carrier light $E_0$ with the subcarrier modulated signal and generate the modulated carrier light $E_0'$, the optical fiber 2 serving as a nonlinear optical medium may be used. The following describes an optical signal processing apparatus according to a third embodiment employed in this case.

[c] Third Embodiment

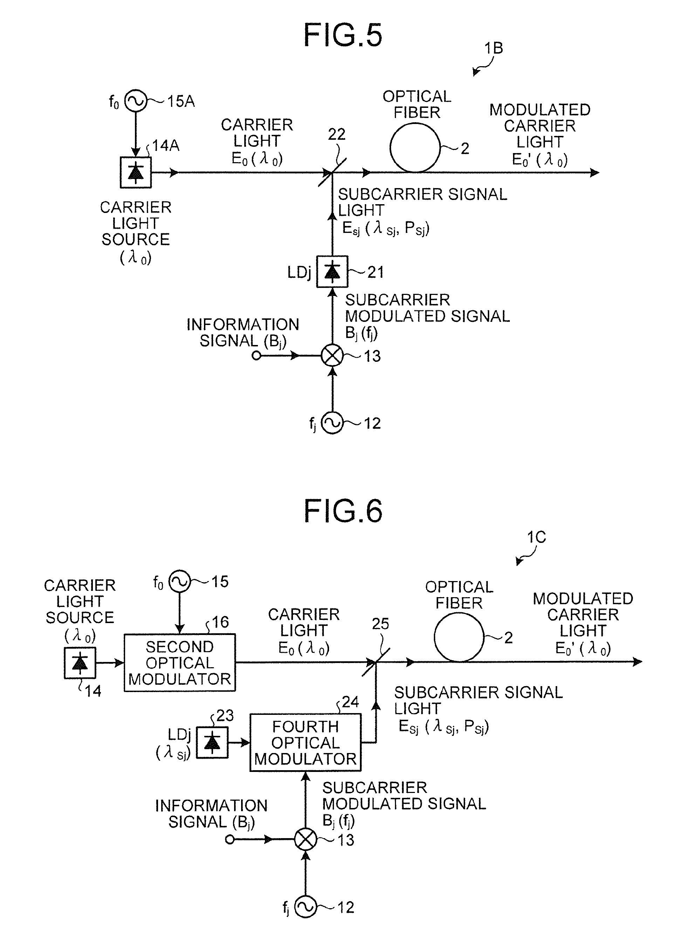

FIG. 5 is an example view for explaining an optical signal processing apparatus 1B according to the third embodiment. Components similar to those in the optical signal processing apparatus 1 according to the first embodiment are denoted by like reference numerals, and overlapping explanation of the configuration and the operation will be omitted.

The optical signal processing apparatus 1B illustrated in FIG. 5 includes a first light source 21, a multiplexer 22, a carrier light source 14A, and a second oscillator 15A besides a first oscillator 12 and a mixer 13. The first light source 21 and the carrier light source 14A employ a direct modulation method. The first light source 21 outputs subcarrier signal light $E_{sj}$ in response to a driving current of a subcarrier modulated signal $B_j(f_j)$ received from the mixer 13. The carrier light source 14A outputs carrier light $E_0$ in response to a driving current corresponding to a second specific frequency $f_0$ output from the second oscillator 15A. The multiplexer 22 multiplexes the carrier light $E_0$ output from the carrier light source 14A and the subcarrier signal light $E_{sj}$ output from the first light source 21 and outputs the light thus multiplexed to an optical fiber 2.

The optical fiber 2 performs cross phase modulation (XPM) using a nonlinear optical medium. The optical fiber 2 modulates the phase of the carrier light $E_0$ in proportion to optical intensity $P_{sj}$ of the subcarrier signal light $E_{sj}$, thereby generating and outputting modulated carrier light $E_0'$. An information signal $B_j$ is optically frequency-division multiplexed at the frequency $\pm f_j$ shifted from the center frequency of the main carrier and the first double side band of the carrier light $E_0$.

The signal light $E_{sj}$ and the carrier light $E_0$ may be input to the multiplexer 22 such that the polarization state thereof is adjusted to achieve desired XPM. The polarization state of the signal light $E_{sj}$ is made the same as that of the carrier light $E_0$ by a polarization controller, which is not illustrated, for example. Alternatively, polarization diversity may be employed in which optical phase modulation is performed on each two orthogonally polarized waves with nearly the same degree of modulation.

The degree of modulation in XPM in the case where the polarization states of the signal light $E_{sj}$ and the carrier light $E_0$ are orthogonal to each other decreases to approximately one-third of that in the case where the polarization states thereof are the same. In this case, for example, a receiver may compensate for the difference in the degrees of modulation using a compensation circuit or a digital signal processing circuit after converting the carrier light $E_0$ into an electrical signal and demodulating the information signal $B_j$ therefrom.

In the modulated carrier light $E_0$', the subcarrier signal light $E_{sj}$ is generated in the first double side band detuned from the main carrier of the carrier light $E_0$ by $\pm f_0$ corresponding to the second specific frequency besides in the double side band of the main carrier as illustrated in FIG. 2(C).

Adjusting the second specific frequency $f_0$ enables the optical signal processing apparatus 1B according to the third embodiment to generate the subcarrier signal light $E_{sj}$ in the first double side band detuned from the main carrier of the carrier light $E_0$ by $\pm f_0$ corresponding to the second specific frequency besides in the double side band of the main carrier. Thus, adjusting the second specific frequency $f_0$ enables the optical signal processing apparatus 1B to optionally set an arbitrary frequency band suitable for conditions for receiving the subcarrier signal light $E_{sj}$ besides a frequency band around the carrier light $E_0$.

While the third embodiment employs the direct modulation method for outputting the subcarrier signal light $E_{sj}$ in response to a driving current of the subcarrier modulation signal with the first light source 21, an external modulation method may be employed. The following describes an optical signal processing apparatus according to a fourth embodiment employed in this case.

[d] Fourth Embodiment

FIG. 6 is an example view for explaining an optical signal processing apparatus 1C according to the fourth embodiment. Components similar to those in the optical signal processing apparatus 1 according to the first embodiment are denoted by like reference numerals, and overlapping explanation of the configuration and the operation will be omitted. The optical signal processing apparatus 1C illustrated in FIG. 6 includes a second light source 23, a fourth optical modulator 24, and a multiplexer 25 besides a first oscillator 12, a mixer 13, a carrier light source 14, a second oscillator 15, and a second optical modulator 16.

The second light source 23 outputs predetermined signal light. The fourth optical modulator 24 optically modulates the signal light received from the second light source 23 with a subcarrier modulated signal $B_j(f_j)$ received from the mixer 13, thereby generating subcarrier signal light $E_{sj}$. The fourth optical modulator 24 then outputs the subcarrier signal light $E_{sj}$ thus generated to the multiplexer 25. The fourth optical modulator 24 is a LiNbO$_3$ (LI) modulator, an electro-absorption (EA) modulator, a nonlinear optical element, a semiconductor optical amplifier, or a quantum dot optical amplifier, for example.

The multiplexer 25 receives carrier light $E_0$ supplied from the second optical modulator 16 and the subcarrier signal light $E_{sj}$ supplied from the fourth optical modulator 24. The multiplexer 25 then multiplexes the carrier light $E_0$ and the subcarrier signal light $E_{sj}$ and outputs the light thus multiplexed to an optical fiber 2. The optical fiber 2 performs XPM, thereby modulating the phase of the carrier light $E_0$ in proportion to the optical intensity $P_{sj}$ of the subcarrier signal light $E_{sj}$. Thus, the optical fiber 2 generates and outputs modulated carrier light $E_0$'. An information signal $B_j$ is optically frequency-division multiplexed at the frequency $\pm f_j$ shifted from the center frequency of the main carrier and the first double side band of the carrier light $E_0$.

In the modulated carrier light $E_0$', the subcarrier signal light $E_{sj}$ is generated in the first double side band detuned from the main carrier of the carrier light $E_0$ by $\pm f_0$ corresponding to a second specific frequency besides in the double side band of the main carrier as illustrated in FIG. 2(C).

Adjusting the second specific frequency $f_0$ enables the optical signal processing apparatus 1C according to the fourth embodiment to generate the subcarrier signal light $E_{sj}$ in the first double side band detuned from the main carrier of the carrier light $E_0$ by $\pm f_0$ corresponding to the second specific frequency besides in the double side band of the main carrier. Thus, adjusting the second specific frequency $f_0$ enables the optical signal processing apparatus 1C to optionally set an arbitrary frequency band suitable for conditions for receiving the subcarrier signal light $E_{sj}$ besides a frequency band around the carrier light $E_0$.

The optical signal processing apparatus 1C performs modulation using the second light source 23 and the fourth optical modulator 24 serving as an external modulator, thereby outputting the subcarrier signal light $E_{sj}$.

Because the optical signal processing apparatus 1C uses a broadband external modulator, the optical signal processing apparatus 1C can output signal light suited to a higher-frequency subcarrier modulated signal $B_j(f_j)$ than the case of the direct modulation method illustrated in FIG. 5. The direct modulation method illustrated in FIG. 5 requires fewer components than the external modulation method illustrated in FIG. 6, thereby reducing the cost.

The fourth embodiment uses a single carrier signal of the first oscillator 12 to generate a modulated signal. Alternatively, an optical beat signal may be used as the carrier signal. The optical beat signal is obtained from a difference frequency component generated in multiplexing of two types of signal light having different wavelengths (frequencies). The following describes an optical signal processing apparatus according to a fifth embodiment employed in this case.

[e] Fifth Embodiment

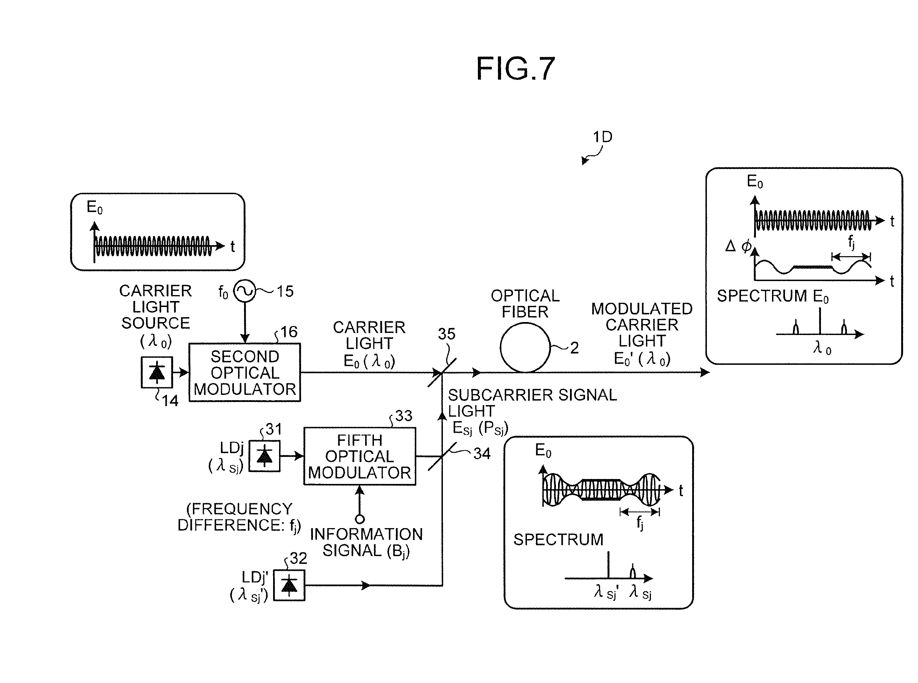

FIG. 7 is an example view for explaining an optical signal processing apparatus 1D according to the fifth embodiment. Components similar to those in the optical signal processing apparatus 1C illustrated in FIG. 6 are denoted by like reference numerals, and overlapping explanation of the configuration and the operation will be omitted. The optical signal processing apparatus 1D illustrated in FIG. 7 includes a third light source 31, a fourth light source 32, a fifth optical modulator 33, a first multiplexer 34, and a second multiplexer 35 besides a carrier light source 14, a second oscillator 15, and a second optical modulator 16.

The third light source 31 outputs third signal light of a wavelength $\lambda_{sj}$. The fourth light source 32 outputs fourth signal light of a wavelength $\lambda_{sj}$'. The third light source 31 and the fourth light source 32 set the wavelengths of the third signal light and the fourth signal light, respectively, such that the wavelength difference between the third signal light and the fourth signal light is equivalent to a first specific frequency $f_j$. The fifth optical modulator 33 optically modulates the third signal light received from the third light source 31 with an information signal $B_j$, thereby generating modulated signal light.

The first multiplexer 34 multiplexes the modulated signal light received from the fifth optical modulator 33 and the fourth signal light received from the fourth light source 32, thereby generating subcarrier signal light $E_{sj}$. The first multiplexer 34 then outputs the subcarrier signal light $E_{sj}$ to the second multiplexer 35. The subcarrier signal light $E_{sj}$ is an optical beat signal with the information signal $B_j$ at a frequency $f_j$ equivalent to the frequency difference between the third signal light and fourth signal light. In the case where the wavelength difference between the third signal light and the fourth signal light is a wavelength equivalent to the first specific frequency $f_j$, the subcarrier signal light $E_{sj}$ output from the first multiplexer 34 is identical to signal light obtained by modulating a carrier signal of the first specific frequency $f_j$ with the information signal $B_j$.

The second multiplexer 35 receives carrier light $E_0$ supplied from the second optical modulator 16 and the subcarrier signal light $E_{sj}$ supplied from the first multiplexer 34 and multiplexes the carrier light $E_0$ and the subcarrier signal light $E_{sj}$. The second multiplexer 35 then outputs the carrier light $E_0$ and the subcarrier signal light $E_{sj}$ thus multiplexed to an optical fiber 2. The optical fiber 2 performs XPM, thereby modulating the phase of the carrier light $E_0$ in proportion to optical intensity $P_{sj}$ of the subcarrier signal light $E_{sj}$. Thus, the optical fiber 2 generates and outputs modulated carrier light $E_0$'. The information signal $B_j$ is optically frequency-division multiplexed at the frequency $\pm f_j$ shifted from the center frequency of the main carrier and the first double side band of the carrier light $E_0$.

In the modulated carrier light $E_0$', the subcarrier signal light $E_{sj}$ is generated in the first double side band detuned from the main carrier of the carrier light $E_0$ by $\pm f_0$ corresponding to a second specific frequency besides in the double side band of the main carrier as illustrated in FIG. 2(C).

Adjusting the second specific frequency $f_0$ enables the optical signal processing apparatus 1D according to the fifth embodiment to generate the subcarrier signal light $E_{sj}$ in the first double side band detuned from the main carrier of the carrier light $E_0$ by $\pm f_0$ corresponding to the second specific frequency besides in the double side band of the main carrier. Thus, adjusting the second specific frequency $f_0$ enables the optical signal processing apparatus 1D to optionally set an arbitrary frequency band suitable for conditions for receiving the subcarrier signal light $E_{sj}$ besides a frequency band around the carrier light $E_0$.

The optical signal processing apparatus 1D modulates an optical beat signal corresponding to the wavelength difference between the third signal light and the fourth signal light with the information signal $B_j$, thereby generating the subcarrier signal light $E_{sj}$. As a result, the optical signal processing apparatus 1D can perform frequency multiplexing of a signal with a higher data rate by carrying out broadband XPM at a higher frequency than the optical signal processing apparatus 1C, for example. Furthermore, the optical signal processing apparatus 1D can perform frequency multiplexing of signal information of more multiple channels by carrying out broadband XPM.

The subcarrier modulation method with an optical beat signal used in the optical signal processing apparatus 1D may also be applied to the second optical modulator 16. In this case, the fifth optical modulator 33 illustrated in FIG. 7 is not required. The optical signal processing apparatus 1D multiplexes two light waves detuned by the specific frequency $f_0$ and inputs the light waves thus multiplexed to an optical fiber used as the second optical modulator 16 together with the carrier light source. The optical signal processing apparatus 1D then modulates the carrier light $E_0$ by a nonlinear optical effect. Thus, the optical signal processing apparatus 1D can perform optical modulation at a high specific frequency $f_0$ at which electro-optical modulation is difficult to perform.

While the first embodiment uses a modulated signal obtained by modulating a single carrier signal with a single information signal for convenience of explanation, signal light obtained by multiplexing a plurality of modulated signals may be used. The following describes an optical signal processing apparatus according to a sixth embodiment employed in this case.

[f] Sixth Embodiment

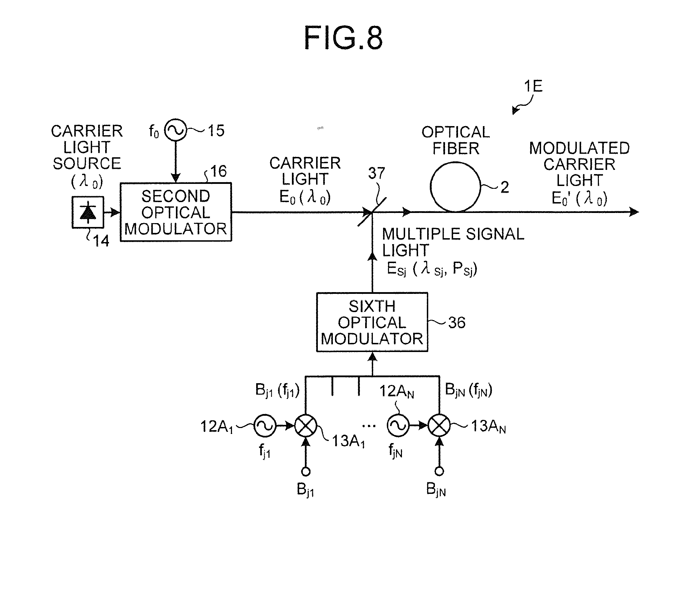

FIG. 8 is an example view for explaining an optical signal processing apparatus 1E according to the sixth embodiment. Components similar to those in the optical signal processing apparatus 1 according to the first embodiment are denoted by like reference numerals, and overlapping explanation of the configuration and the operation will be omitted. The optical signal processing apparatus 1E illustrated in FIG. 8 includes a plurality of first oscillators $12A_1$ to $12A_N$, a plurality of mixers $13A_1$ to $13A_N$, a sixth optical modulator 36, and a multiplexer 37 besides a carrier light source 14, a second oscillator 15, and a second optical modulator 16. The mixers $13A_1$ to $13A_N$ are provided to the first oscillators $12A_1$ to $12A_N$, respectively.

Detection of information signals $B_j$ causes the mixers $13A_1$ to $13A_N$ to modulate carrier signals $f_j$ received from the first oscillators $12A_1$ to $12A_N$, respectively, with the information signals $B_j$. The mixers $13A_1$ to $13A_N$ then output the modulated signals to the sixth optical modulator 36 sequentially. After electrically multiplexing the modulated signals received from the mixers $13A_1$ to $13A_N$. The sixth optical modulator 36 optically modulates the multiple modulated signal thus multiplexed, thereby generating subcarrier multiple signal light $E_{sj}$, the sixth optical modulator 36 then outputs the subcarrier multiplexed signal light $E_{sj}$ thus generated to the multiplexer 37.

The multiplexer 37 receives carrier light $E_0$ supplied from the second optical modulator 16 and the subcarrier multiplexed signal light $E_{sj}$ supplied from the sixth optical modulator 36. The multiplexer 37 then multiplexes the carrier light $E_0$ and the subcarrier multiplexed signal light $E_{sj}$ and outputs the light thus multiplexed to an optical fiber 2. The optical fiber 2 performs XPM with a nonlinear optical medium thereby modulating the phase of the carrier light $E_0$ in proportion to optical intensity $P_{sj}$ of the subcarrier multiplexed signal light $E_{sj}$. Thus, the optical fiber 2 generates and outputs modulated carrier light $E_0'$.

In the modulated carrier light $E_0'$, the subcarrier multiplexed signal light $E_{sj}$ is generated in the first double side band detuned from the main carrier of the carrier light $E_0$ by $\pm f_0$ corresponding to a second specific frequency besides in the double side band of the main carrier as illustrated in FIG. 2(C).

Adjusting the second specific frequency $f_0$ enables the optical signal processing apparatus 1E according to the sixth embodiment to generate the subcarrier multiplexed signal light $E_{sj}$ in the first double side band detuned from the main carrier of the carrier light $E_0$ by $\pm f_0$ corresponding to the second specific frequency besides in the double side band of the main carrier. Thus, adjusting the second specific frequency $f_0$ enables the optical signal processing apparatus 1E to optionally set an arbitrary frequency band suitable for conditions for receiving the subcarrier multiplexed signal light $E_{sj}$ besides a frequency band around the carrier light $E_0$.

The optical signal processing apparatus 1E optically modulates the carrier light $E_0$ with the subcarrier multiplexed signal light $E_{sj}$ obtained by performing frequency multiplexing of a plurality of information signals $B_j$. Therefore, the optical signal processing apparatus 1E can multiplex and collectively transmit the information signals $B_j$.

[g] Seventh Embodiment

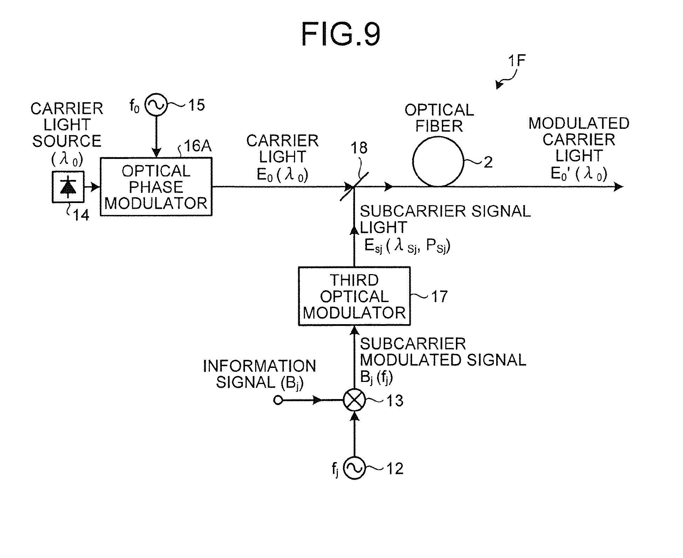

FIG. 9 is an example view for explaining an optical signal processing apparatus 1F according to a seventh embodiment. Components similar to those in the optical signal processing apparatus 1A according to the second embodiment are denoted by like reference numerals, and overlapping explanation of the configuration and the operation will be omitted. The optical signal processing apparatus 1F illustrated in FIG. 9 includes an optical phase modulator 16A besides a first oscillator 12, a mixer 13, a third optical modulator 17, a multiplexer 18, a carrier light source 14, and a second oscillator 15. The optical phase modulator 16A optically modulates the phase of carrier light $E_0$ supplied from the carrier light source 14 at a second specific frequency $f_0$. The optical phase modulator 16A then outputs the carrier light $E_0$ thus optically phase-modulated to an optical fiber 2. The multiplexer 18 multiplexes the carrier light $E_0$ optically phase-modulated by the optical phase modulator 16A and subcarrier signal light $E_{sj}$ output from the third optical modulator 17. The multiplexer 18 then outputs the light thus multiplexed to the optical fiber 2.

The optical fiber 2 performs XPM with a nonlinear optical medium, thereby modulating the phase of the carrier light $E_0$ in proportion to optical intensity $P_{sj}$ of the subcarrier signal light $E_{sj}$. Thus, the optical fiber 2 generates and outputs modulated carrier light $E_0'$. An information signal $B_j$ in the subcarrier signal light $E_{sj}$ is optically frequency-division multiplexed at the frequency $\pm f_j$ shifted from the center frequency of the main carrier and the first double side band of the carrier light $E_0$. This can prevent fluctuations in the optical intensity of the main carrier of the carrier light $E_0$ in the spectrum of the carrier light $E_0$ illustrated in FIG. 2(C). Thus, the carrier light $E_0$ can be used as a stable carrier light source.

In the modulated carrier light $E_0'$, the subcarrier signal light $E_{sj}$ is generated in the first double side band detuned from the main carrier of the carrier light $E_0$ by $\pm f_0$ corresponding to the second specific frequency besides in the double side band of the main carrier as illustrated in FIG. 2(C).

Adjusting the second specific frequency $f_0$ enables the optical signal processing apparatus 1F according to the seventh embodiment to generate the subcarrier signal light $E_{sj}$ in the first double side band detuned from the main carrier of the carrier light $E_0$ by $\pm f_0$ corresponding to the second specific frequency besides in the double side band of the main carrier. Thus, adjusting the second specific frequency $f_0$ enables the optical signal processing apparatus 1F to optionally set an arbitrary frequency band suitable for conditions for receiving the subcarrier signal light $E_{sj}$ besides a frequency band around the carrier light $E_0$.

While the optical signal processing apparatus 1 (1A to 1F) serves as a transmitter that outputs the modulated carrier light $E_0'$ to the optical fiber 2 in the first to the seventh embodiments, the present invention is applicable to a relay optical node. The following describes an optical network provided with the optical signal processing apparatus 1A according to an eighth embodiment, for example.

[h] Eighth Embodiment

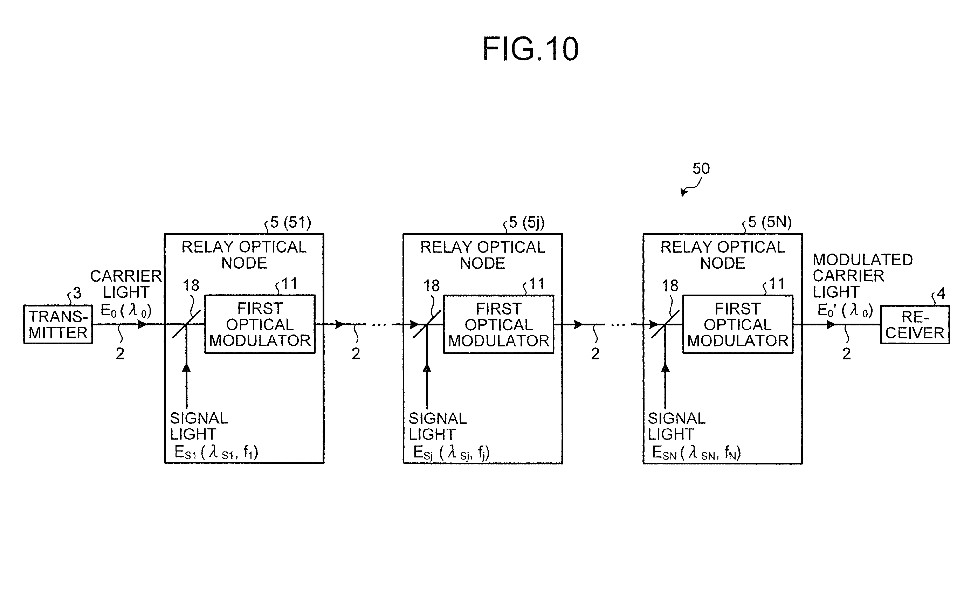

FIG. 10 is an example view for explaining an optical network 50 according to the eighth embodiment. Components similar to those in the optical signal processing apparatus 1A according to the second embodiment are denoted by like reference numerals, and overlapping explanation of the configuration and the operation will be omitted. The optical network 50 illustrated in FIG. 10 includes a transmitter 3, a receiver 4, and a plurality of relay optical nodes 5. The transmitter 3 and the receiver 4 are connected to each other via an optical fiber 2. The relay optical nodes 5 are arranged on and connected to the optical fiber 2. The relay optical nodes 5 each optically modulate carrier light $E_0$ received from the transmitter 3 with subcarrier signal light $E_{sj}$ and multiplex an information signal $B_j$. The number of relay optical nodes 5 thus arranged is N, including a relay optical node 51, a relay optical node 5j, and a relay optical node 5N, for example.

The transmitter 3 is the optical signal processing apparatus 1A according to the second embodiment, for example. The relay optical nodes 5 each include the internal components of the optical signal processing apparatus 1A other than the carrier light source 14, the second oscillator 15, and the second optical modulator 16, that is, the first optical modulator 11, the first oscillator 12, the mixer 13, the third optical modulator 17, and the multiplexer 18, for example.

Adjusting a second specific frequency $f_0$ at which the carrier light $E_0$ is optically modulated enables the transmitter 3 to generate subcarrier signal light $E_s$ in the first double side band detuned from the main carrier of the carrier light $E_0$ by $\pm f_0$ corresponding to the second specific frequency besides in the double side band of the main carrier. Thus, adjusting the second specific frequency $f_0$ enables the transmitter 3 to generate the subcarrier signal light $E_s$ in an arbitrary frequency band besides around the carrier light $E_0$.

The relay optical node 51 modulates a carrier signal of a first specific frequency $f_1$ with an information signal $B_{s1}$, thereby generating subcarrier signal light $E_{s1}$. The relay optical node 5j modulates a carrier signal of a first specific frequency $f_j$ with an information signal $B_{sj}$, thereby generating subcarrier signal light $E_{sj}$. The relay optical node 5N modulates a carrier signal $f_N$ with an information signal $B_{SN}$, thereby generating subcarrier signal light $E_{SN}$.

The first optical modulator 11 in the relay optical node 51 optically modulates the carrier light $E_0$ received from the optical fiber 2 with the subcarrier signal light $E_{S1}$, thereby generating modulated carrier light $E_0'$. The first optical modulator 11 in the relay optical node 5j optically modulates the modulated carrier light $E_0'$ received from the optical fiber 2 with the subcarrier signal light $E_{sj}$, thereby generating modulated carrier light $E_0'$. The first optical modulator 11 in the relay optical node 5N optically modulates the modulated carrier light $E_0'$ received from the optical fiber 2 with the subcarrier signal light $E_{SN}$, thereby generating modulated carrier light $E_0'$.

The operation of the optical network 50 according to the eighth embodiment will now be described. The transmitter 3 outputs the carrier light $E_0$ of a wavelength $\lambda_0$ optically modulated at the second specific frequency $f_0$ to the optical fiber 2. The relay optical node 51 optically modulates the carrier light $E_0$ transmitted from the transmitter 3 with the subcarrier signal light $E_{s1}$ of a wavelength $\lambda_{s1}$, thereby generating the modulated carrier light $E_0'$. The relay optical node 51 then outputs the modulated carrier light $E_0'$ to the optical fiber 2. The relay optical node 51 performs optical frequency-division multiplexing of the information signal $B_{s1}$ at the frequency $\pm f_j$ shifted from the center frequency of the main carrier and the first double side band of the carrier light $E_0$ in the modulated carrier light $E_0'$. The relay optical node 5j optically modulates the modulated carrier light $E_0'$ transmitted from the optical fiber 2 with the subcarrier signal light $E_{sj}$ of a wavelength $\lambda_{sj}$, thereby generating the modulated carrier light $E_0'$. The relay optical node 5j then outputs the modulated carrier light $E_0'$ to the optical fiber 2. The relay optical node 5j performs optical frequency-division multiplexing of an information signal $B_{sj}$ at the frequency $\pm f_j$ shifed from the main carrier and a first center frequency of the carrier light $E_0$ in the modulated carrier light $E_0'$. The relay optical node 5N optically modulates the modulated carrier light $E_0'$ transmitted from the optical fiber 2 with the subcarrier signal light $E_{sN}$ of a wavelength $\lambda_{sN}$, thereby generating the modulated carrier light $E_0'$. The relay optical node 5N then outputs the modulated carrier light $E_0'$ to the optical fiber 2. The relay optical node 5N performs optical frequency multiplexing of an information signal $B_{sN}$ at the frequency $\pm f_N$ shifted from the main carrier and the first center frequency of the carrier light $E_0$ in the modulated carrier light $E_0'$.

The receiver 4 receives the modulated carrier light $E_0'$ multiplexed with the information signals $B_s$ by the respective relay optical nodes 5. The receiver 4 converts the modulated carrier light $E_0'$ into a modulated signal of the subcarrier signal light $E_{sj}$. The receiver 4 extracts a modulated signal of a receiving channel from the modulated signal thus converted. The receiver 4 then demodulates the modulated signal thus extracted, thereby obtaining the information

signal $B_s$.

Adjusting the second specific frequency $f_0$ enables the transmitter 3 to generate the subcarrier signal light $E_{s1}$ in the first double side band detuned from the main carrier of the carrier light $E_0$ by $\pm f_0$ corresponding to the second specific frequency besides around the carrier light $E_0$. As a result, the receiver 4 can receive the subcarrier signal light $E_s$ generated in the first double side band of the main carrier of the carrier light $E_0$ besides around the main carrier of the carrier light $E_0$.

Adjusting the second specific frequency $f_0$ enables the transmitter 3 according to the eighth embodiment to generate the subcarrier signal light $E_s$ in the first double side band detuned from the main carrier of the carrier light $E_0$ by $\pm f_0$ corresponding to the second specific frequency besides in the double side band of the main carrier. Thus, adjusting the second specific frequency $f_0$ enables the transmitter 3 to optionally set an arbitrary frequency band suitable for conditions for receiving the subcarrier signal light $E_s$ besides a frequency band around the carrier light $E_0$.

The relay optical nodes 5 can perform optical frequency-division multiplexing of a plurality of information signals $B_j$ on the single carrier light $E_0$ by changing the frequency of the carrier signal for each information signal $B_s$. To transmit the information signals $B_s$, the relay optical nodes 5 can transmit the information signal $B_j$ from a plurality of arbitrary points without preparing a plurality of optical fibers 2 or light of a plurality of wavelengths.

[i] Ninth Embodiment

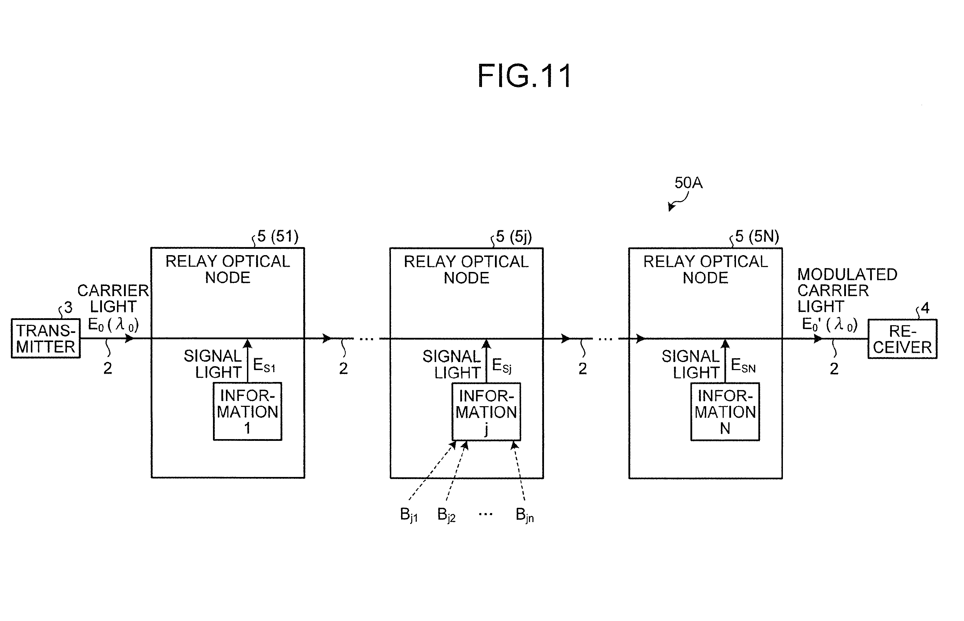

FIG. 11 is an example view for explaining an optical network 50A according to a ninth embodiment. Components similar to those in the optical network 50 according to the eighth embodiment are denoted by like reference numerals, and overlapping explanation of the configuration and the operation will be omitted.

A transmitter 3 in the optical network 50A outputs carrier light $E_0$ of a wavelength $\lambda_0$ optically modulated at a second specific frequency $f_0$ to an optical fiber 2. Each relay optical node 5 classifies a plurality of information signals $B_{j1}$, $B_{j2}$, ..., $B_{jN}$ in units of groups and allocates different first specific frequencies $f_j$ to the respective groups. The relay optical node 5 multiplexes the information signals $B_{j1}$, $B_{j2}$, ..., $B_{jN}$ in units of groups, thereby generating a multiple signal. The relay optical node 5 modulates a carrier signal of the first specific frequency $f_j$ allocated to the group with the multiple signal in units of groups, thereby generating a subcarrier multiplexed signal. Furthermore, the relay optical node 5 optically modulates the subcarrier multiplexed signal in units of groups, thereby generating subcarrier multiplexed signal light $E_{sj}$.

The relay optical node 5 optically modulates modulated carrier light $E_0$' transmitted from the optical fiber 2 with the subcarrier multiplexed signal light $E_{sj}$, thereby generating the modulated carrier light $E_0$'. The relay optical node 5 then outputs the modulated carrier light $E_0$' thus generated to the optical fiber 2. In other words, the relay optical node 5 performs optical frequency-division multiplexing of an information signal $B_s$ at the frequency $\pm f_j$ shifted from the center frequency of the main carrier and the first double side band of the carrier light $E_0$ in the modulated carrier light $E_0$'.

A receiver 4 receives the modulated carrier light $E_0$' multiplexed with the signal $E_{sj}$ by the respective relay optical nodes 5. The receiver 4 converts the modulated carrier light $E_0$' into a frequency-division multiplexed signal. The receiver 4 extracts a multiple signal of a receiving channel from the frequency-division multiplexed signal thus converted. The receiver 4 then demodulates the multiple signal thus extracted, thereby obtaining the information signal $B_{jN}$.

Adjusting the second specific frequency $f_0$ enables the transmitter 3 according to the ninth embodiment to generate the subcarrier signal light $E_s$ in the first double side band detuned from the main carrier of the carrier light $E_0$ by $\pm f_0$ corresponding to the second specific frequency besides in the double side band of the main carrier. Thus, adjusting the second specific frequency $f_0$ enables the transmitter 3 to optionally set an arbitrary frequency band suitable for conditions for receiving the subcarrier signal light $E_s$ besides a frequency band around the carrier light $E_0$.

A relay optical node 5j multiplexes a plurality of information signals $B_{jn}$ (n=1, 2, ..., N) in units of groups and performs optical frequency-division multiplexing of the multiple signal in units of groups on the single carrier light $E_0$. Therefore, the relay optical node 5j can collectively transmit the information signals $B_{jn}$ (n=1, 2, ..., N). To transmit the information signals $B_{jn}$ (n=1, 2, ..., N), the relay optical node 5 can transmit information signals $B_j$ (j=1, 2, ..., $j_n$) from a plurality of arbitrary points without preparing a plurality of optical fibers 2 or light of a plurality of wavelengths.

The number n of information signals $B_j$ (j=1, 2, ..., $j_n$) multiplexed by the relay optical node 5j at each point is optionally set within an allowable range of a band. The method for modulating the information signals $B_j$ (j=1, 2, ..., $j_n$) is arbitrary. The relay optical node 5j can multiplex signals in wide variety of formats, such as a signal for wireless communications.

The following describes a receiver 4 that receives the modulated carrier light $E_0$' transmitted through the optical fiber 2 according to a tenth embodiment.

[j] Tenth Embodiment

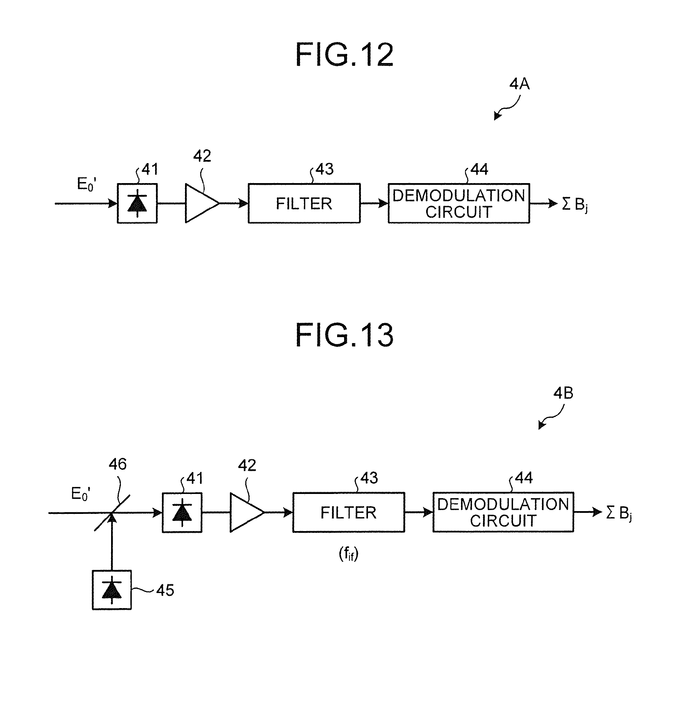

FIG. 12 is an example view for explaining a receiver 4A according to the tenth embodiment. The receiver 4A illustrated in FIG. 12 is an example of the receiver 4 in the optical network 50A in FIG. 11. The receiver 4A includes an optical receiver 41, an amplifier 42, a filter 43, and a demodulation circuit 44. The optical receiver 41 corresponds to a photo diode (PD), for example. The optical receiver 41 receives modulated carrier light $E_0$' from an optical fiber 2 and electrically converts the modulated carrier light $E_0$' thus received into a frequency-division multiplexed signal. The frequency-division multiplexed signal is an electrical signal obtained by multiplexing modulated signals of N-channels, for example.

The amplifier 42 amplifies the frequency-division multiplexed signal thus electrically converted. The filter 43 extracts each carrier signal from the frequency-division multiplexed signal thus amplified. The filter 43 need not transmit all the carrier signals of N-channels and may transmit only a carrier signal of a receiving channel. The filter 43 sets a filter frequency to extract a subcarrier modulated signal in a receiving band suitable for receiving conditions of the receiver 4A among a plurality of subcarrier modulated signals. The demodulation circuit 44 is a circuit provided with a demodulation structure corresponding to the method for modulating an information signal, for example. The demodulation circuit 44 is an envelope detector, a square-law detector, a synchronous detector, a phase detector, or a frequency detector, for example.

In the modulated carrier light $E_0$', the subcarrier modulated signal is generated in the first double side band detuned from the main carrier of carrier light $E_0$ by $\pm f_0$ corresponding to a second specific frequency besides in the double side band of the main carrier.

The receiver 4A according to the tenth embodiment can receive a subcarrier modulated signal generated in the first double side band detuned from the main carrier of the carrier light $E_0$ by $\pm f_0$ corresponding to the second specific frequency besides a subcarrier modulated signal generated in the double side band of the main carrier.

The receiver 4A can demodulate an information signal $\Sigma B_j$ from the modulated carrier light $E_0$' on which XPM is performed with signal light through a nonlinear optical medium.

The demodulation circuit 44 may perform demodulation using a digital signal processing circuit, including the cases of a phase modulated signal, a multilevel modulated signal, an orthogonal frequency division multiplexing (OFDM) signal, and a quadrature amplitude modulation (QAM) signal, for example. The demodulation circuit 44 may be provided with a digital signal processing circuit that provides a forward error correction.

The receiver 4A according to the tenth embodiment receives the modulated carrier light $E_0$' from the optical fiber 2. The following describes a receiver 4 provided with a structure that multiplexes the modulated carrier light $E_0$' transmitted from the optical fiber 2 and local light (LO) according to an eleventh embodiment. Reception with optimum sensitivity may be achieved by: arranging an optical band filter at the input stage of the receiver 4A and extracting and inputting only the main carrier and one side of the modulated components to the optical receiver 41; or performing reception such that the phase in the double side band is shifted by 180 degrees with a dispersive medium, for example.

[k] Eleventh Embodiment

FIG. 13 is an example view for explaining a receiver 4B according to the eleventh embodiment. Components similar to those in the receiver 4A according to the tenth embodiment are denoted by like reference numerals, and overlapping explanation of the configuration and the operation will be omitted. The receiver 4B illustrated in FIG. 13 includes a local light source 45 and a multiplexer 46 besides an optical receiver 41, an amplifier 42, a filter 43, and a demodulation circuit 44.

The local light source 45 outputs local light LO of a frequency (wavelength) detuned from a frequency (wavelength) of carrier light $E_0$ by a predetermined detuning frequency ($f_{if}$). The multiplexer 46 is arranged between an optical fiber 2 and the optical receiver 41. The multiplexer 46 multiplexes modulated carrier light $E_0$' received from the optical fiber 2 and the local light LO received from the local light source 45. The multiplexer 46 then outputs the modulated carrier light $E_0$' thus multiplexed to the optical receiver 41.

The optical receiver 41 converts the modulated carrier light received from the multiplexer 46 into a frequency-division multiplexed signal in an intermediate frequency band ($f_{if}$). The amplifier 42 amplifies the frequency-division multiplexed signal in the intermediate frequency band ($f_{if}$). The filter 43 extracts each carrier signal from the frequency multiple signal in the intermediate frequency band ($f_{if}$) thus amplified. The filter 43 sets a filter frequency to extract a subcarrier modulated signal in a receiving band suitable for receiving conditions of the receiver 4B among a plurality of subcarrier modulated signals. The demodulation circuit 44 demodulates the frequency-division multiplexed signal in the intermediate frequency band ($f_{if}$) thus extracted into an information signal.

In the modulated carrier light $E_0$', the subcarrier modulated signal is generated in the first double side band detuned from the main carrier of the carrier light $E_0$ by $\pm f_0$ corresponding to a second specific frequency besides in the double side band of the main carrier.

The receiver 4B according to the eleventh embodiment can receive a subcarrier modulated signal generated in the first double side band detuned from the main carrier of the carrier light $E_0$ by $\pm f_0$ corresponding to the second specific frequency besides a subcarrier modulated signal generated in the double side band of the main carrier.

The receiver 4B sets the intermediate frequency band ($f_{if}$) to 0, thereby detecting a signal through digital signal processing for homodyne detection. Thus, the receiver 4B is suitably used for a digital coherent receiving system, for example.

[l] Twelfth Embodiment

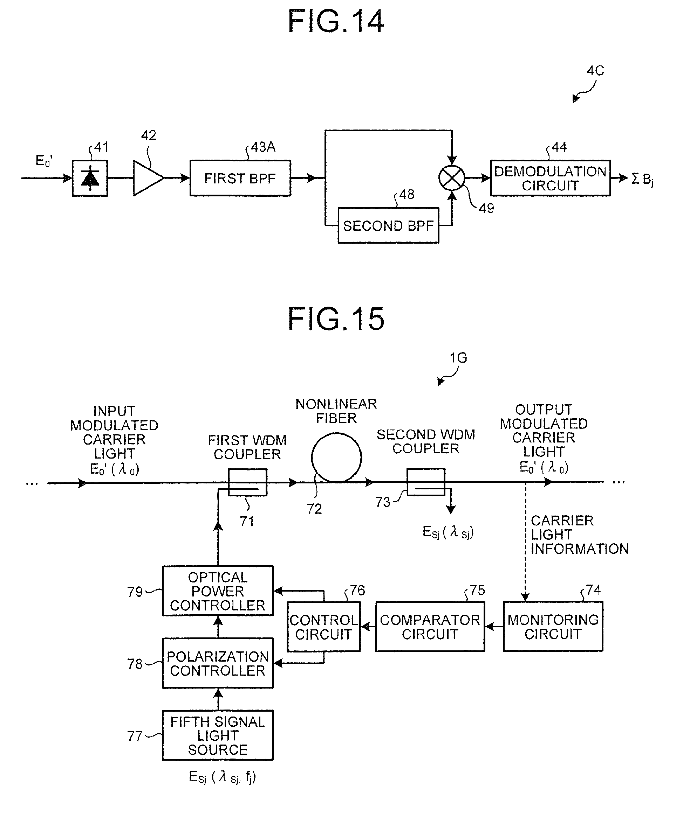

FIG. 14 is an example view for explaining a receiver 4C according to a twelfth embodiment. Components similar to those in the receiver 4A according to the tenth embodiment are denoted by like reference numerals, and overlapping explanation of the configuration and the operation will be omitted. The receiver 4C illustrated in FIG. 14 includes a second band-pass filter (BPF) 48 and a mixer 49 besides an optical receiver 41, an amplifier 42, a first BPF 43A, and a demodulation circuit 44.

The receiver 4C receives a main carrier component, a beat component between $\pm j_+$ of $+f_0$ and $\pm j_-$ of $-f_0$, and a beat component between a $\pm f_0$ component and a $\pm j$ component in carrier light $E_0$ at a frequency of $f_0 \pm f_j$.

The optical receiver 41 converts modulated carrier light $E_0$' into a frequency-division multiplexed signal. The amplifier 42 amplifies the frequency-division multiplexed signal thus converted. The first BPF 43A extracts a carrier signal in a frequency range of $f_0 + f_j \leq f \leq f_0 - f_j$ from the frequency-division multiplexed signal thus amplified. The first BPF 43A then outputs the carrier signal thus extracted to the mixer 49 and the second BPF 48.

The second BPF 48 extracts a carrier signal of a frequency $f_0$ from the carrier signal thus extracted. The mixer 49 mixes the signal extracted by the first BPF 43A and the signal extracted by the second BPF 48, thereby obtaining a subcarrier modulated signal down-converted into a frequency $f_j$. The demodulation circuit 44 demodulates the subcarrier modulated signal into the j-th information signal $B_j$. The demodulation circuit 44 may be an envelope detector, a square-law detector, a synchronous detector, or a digital signal processing circuit that can demodulate a multilevel modulated signal, an OFDM signal, and a QAM signal, for example.

In the modulated carrier light $E_0$', the subcarrier modulated signal is generated in the first double side band detuned from the main carrier of the carrier light $E_0$ by $\pm f_0$ corresponding to a second specific frequency besides in the double side band of the main carrier.

The receiver 4C according to the twelfth embodiment can receive a subcarrier modulated signal generated in the first double side band detuned from the main carrier of the carrier light $E_0$ by $\pm f_0$ corresponding to the second specific frequency besides a subcarrier modulated signal generated in the double side band of the main carrier.

The optical signal processing apparatus 1 (1A to 1F) according to the first to the seventh embodiments may have a function to perform processing related to optical intensity adjustment and polarization adjustment. The following describes an optical signal processing apparatus according to a thirteenth embodiment employed in this case.

[m] Thirteenth Embodiment

FIG. 15 is an example view for explaining an optical signal processing apparatus 1G according to the thirteenth embodiment. The optical signal processing apparatus 1G illustrated in FIG. 15 includes a first wavelength division multiplexing (WDM) coupler 71, a nonlinear fiber 72, a second WDM coupler 73, a monitoring circuit 74, a comparator circuit 75, a control circuit 76, a fifth signal light source 77, a polarization controller 78, and an optical power controller 79. The first WDM coupler 71 multiplexes input modulated carrier light $E_0$' transmitted through the nonlinear fiber 72 and signal light. The nonlinear fiber 72 is arranged between the first WDM coupler 71 and the second WDM coupler 73. The second WDM coupler 73 optically separates the modulated carrier light $E_0$' from the signal light. The monitoring circuit 74 monitors the quality of the modulated carrier light $E_0$'. The monitoring circuit 74 includes a filter that extracts the wavelength of the modulated carrier light $E_0$' and a light receiving element that receives the modulated carrier light $E_0$' thus extracted, for example.

The comparator circuit 75 derives operating characteristics of the modulated carrier light $E_0$' based on the optical intensity, the waveform, the spectrum, and other elements of the modulated carrier light $E_0$', which is the results of monitoring performed by the monitoring circuit 74. The comparator circuit 75 then compares the operating characteristics with a predetermined threshold. The control circuit 76 controls the optical power controller 79 and the polarization controller 78 based on the results of comparison made by the comparator circuit 75.

The optical power controller 79 controls the optical intensity of signal light related to XPM of the nonlinear fiber 72 and the modulated carrier light $E_0$'. The control circuit 76 controls the optical power controller 79. The polarization controller 78 controls the polarization state of signal light related to XPM of the nonlinear fiber 72 and the modulated carrier light $E_0$'. The control circuit 76 controls the polarization controller 78. When receiving signal light, the polarization controller 78 controls the polarization state of the signal light under the control of the control circuit 76.

The optical signal processing apparatus 1G performs feedback control on the optical intensity and the polarization state of the signal light related to XPM of the nonlinear fiber 72 and the modulated carrier light $E_0$' based on the monitoring results of the output modulated carrier light $E_0$'. As a result, the optical signal processing apparatus 1G can output the modulated carrier light $E_0$' on which XPM is appropriately performed by the nonlinear fiber 72.

The optical fiber 2 according to the embodiments is a single-mode fiber or a high nonlinear optical fiber (HNLF) long enough to exert a nonlinear optical effect, for example. Furthermore, WDM couplers may be provided before and after the optical fiber 2, thereby multiplexing an information signal with carrier light $E_0$ by the nonlinear optical effect in the optical fiber 2.

An actual optical network can use a part of the optical fiber 2 as a cross phase modulator to optically modulate the carrier light $E_0$ at an arbitrary point in the optical network. If no signal light is received, the carrier light $E_0$ is unaffected, which enables the optical network to ensure consistency with a conventional optical network. Specifically, to use a medium having a larger nonlinear optical effect, the optical fiber 2 is preferably formed of a HNLF, or a fiber or a waveguide in which the nonlinear refractive index is increased by doping germanium and bismuth to the core, for example. Furthermore, the optical fiber 2 may be formed of a fiber or a waveguide in which the optical power density is increased by reducing a mode field, a fiber or a waveguide made of chalcogenide glass, or a photonic crystal fiber or waveguide, for example.

Alternatively, a semiconductor optical amplifier having a quantum well structure, a quantum dot semiconductor optical amplifier, or a silicon photonics waveguide may be used as the nonlinear optical medium, for example. Still alternatively, a device that exerts a second-order nonlinear optical effect, such as three-wave mixing, may be used as the nonlinear optical medium. In this case, the device may be formed of a $LiNbO_3$ waveguide, a GaAlAs element, or a second-order nonlinear optical crystal having a quasi-phase-matching structure, for example.

In the case where the optical receiver 41 of the receiver 4A receives an optical frequency-division multiplexed modulated signal in XPM, the phase of the carrier light $E_0$ is shifted by 180 degrees between the upper band and the lower band. For this reason, a dispersive medium or the like may be arranged at the former stage of the receiver 4 to compensate for the phase shift and receive the light. An optimum amount of dispersion is inversely proportion to the square of a subcarrier frequency. Shifting the subcarrier frequency by $\pm f_0$ can reduce a required amount of dispersion. In addition, the optical receiver 41 can receive light constantly using the same amount of dispersion regardless of the value of the subcarrier frequency. In this case, it is also effective to cause the band of the receiver 4 to coincide with that of the transmitter 3 by shifting the frequency by $\pm f_0$ after receiving the light.

The subcarrier modulated signal and the subcarrier modulated signal light are applicable to an amplitude modulated signal, a phase modulated signal, a frequency modulated signal, a multilevel modulated signal, an OFDM signal, and a QAM signal, for example.

The components of each unit illustrated in the drawings are not necessarily physically configured as illustrated. In other words, the specific aspects of dispersion and integration of each unit are not limited to those illustrated in the drawings. The whole or a part thereof may be dispersed or integrated functionally or physically in arbitrary units depending on various types of loads and usages, for example.

An aspect of the disclosure can optionally set a frequency at which a subcarrier modulated signal is generated.

**Claims**

1. An optical signal processing apparatus (1) comprising:

   a generating unit (13) that modulates a carrier signal of a first specific frequency ($f_j$) with an information signal ($B_j$) to generate a subcarrier modulated signal ($S_j$); and
   an optical modulation unit (11) that includes an optical modulation medium and that optically modulates, with the subcarrier modulated signal ($S_j$), carrier light ($E_0$) optically modulated at a second specific frequency ($f_0$) to generate and output modulated carrier light ($E_0$').

2. The optical signal processing apparatus (1A) according to claim 1, wherein
   the generating unit (13) optically modulates the subcarrier modulated signal to generate signal light ($E_{sj}$) of the subcarrier modulated signal, and
   the optical modulation unit (11) multiplexes the carrier light and the signal light and optically modulates the carrier light ($E_0$) with the signal light ($E_{sj}$) to generate the modulated carrier light ($E_0$').

3. The optical signal processing apparatus (1B) according to claim 2, wherein the optical modulation unit (2,11) optically modulates a phase of the carrier light in response to a change in the intensity of the signal light based on a cross phase modulation effect due to an internal nonlinear optical medium.

4. The optical signal processing apparatus according to claim 2 or 3, wherein the signal light has a wavelength different from that of the carrier light.

**5.** The optical signal processing apparatus according to any one of claims 2 to 4, wherein
the generating unit (36) allocates different first specific frequencies ($f_j$) to respective information signals ($B_j$), optically modulates the first specific frequencies allocated to the respective information signals with the respective information signals to generate signal light ($E_{sj}$) of subcarrier modulated signals, and multiplexes the signal light ($E_{sj}$) of the subcarrier modulated signals generated for the respective information signals, and
the optical modulation unit (2) optically modulates the carrier light with the signal light of the subcarrier modulated signals thus multiplexed to generate the modulated carrier light ($E_0'$).

**6.** The optical signal processing apparatus according to any one of claims 2 to 4, wherein
the generating unit classifies a plurality of information signals in units of groups, allocates different first specific frequencies to the respective units of groups, and optically modulates the first specific frequencies allocated to respective groups with a multiple signal obtained by multiplexing the information signals in the respective groups to generate signal light ($E_s$) of a subcarrier multiplexed signal, and
the optical modulation unit(2) optically modulates the carrier light with the signal light of the subcarrier multiplexed signal to generate the modulated carrier light ($E_0'$).

**7.** The optical signal processing apparatus according to any one of claims 2 to 6, further comprising:

a carrier light generating unit (14,15,16) that generates the carrier light ($E_0$) and optically modulates the carrier light thus generated at the second specific frequency, wherein
the optical modulation unit (2,11) optically modulates the carrier light generated by the carrier light generating unit with the signal light of the subcarrier modulated signal to generate the modulated carrier light.

**8.** The optical signal processing apparatus according to any one of claims 2 to 7, further comprising a polarization control unit (78,76) that controls a polarization state of the signal light and the carrier light.

**9.** The optical signal processing apparatus according to claim 8, wherein the polarization control unit (74,75,76,78) monitors the modulated carrier light optically modulated by the optical modulation unit (72) and controls the polarization state of the carrier light and the signal light based on a monitoring result of the modulated carrier light.

**10.** An optical signal processing method executed by an optical signal processing apparatus (1), the optical signal processing method comprising:

modulating a carrier signal of a first specific frequency ($f_j$) with an information signal ($B_j$) and generating a subcarrier modulated signal ($S_j$); and
optically modulating, with the subcarrier modulated signal, carrier light ($E_0$) optically modulated at a second specific frequency ($f_0$) and generating and outputting modulated carrier light ($E_0'$).

# FIG.1

# FIG.2

# FIG.3

$E_0$

$f_0$

$f_j$

$\Delta f$

-j-    j-    -j    j    -j+    j+

f

$f_{opt}$

# FIG.4

1A

CARRIER LIGHT SOURCE ($\lambda_0$)

$f_0$ 〜15

16

SECOND OPTICAL MODULATOR

14

CARRIER LIGHT $E_0$ ($\lambda_0$)

18

11

FIRST OPTICAL MODULATOR

MODULATED CARRIER LIGHT $E_0{}'$ ($\lambda_0$)

OPTICAL FIBER

2

SUBCARRIER SIGNAL LIGHT $E_{sj}$ ($\lambda_{sj}$, $P_{sj}$)

THIRD OPTICAL MODULATOR 〜17

SUBCARRIER MODULATED SIGNAL $B_j$ ($f_j$)

INFORMATION SIGNAL ($B_j$)

⊗ 〜13

$f_j$ 〜12

# FIG.5

# FIG.6

# FIG.7

EP 2 738 957 A1

# FIG.8

CARRIER LIGHT SOURCE ($\lambda_0$)

$f_0$ ~15

~14

~16 SECOND OPTICAL MODULATOR

CARRIER LIGHT $E_0$ ($\lambda_0$)

37

OPTICAL FIBER ~2

1E

MODULATED CARRIER LIGHT $E_0'$ ($\lambda_0$)

MULTIPLE SIGNAL LIGHT $E_{sj}$ ($\lambda_{sj}$, $P_{sj}$)

SIXTH OPTICAL MODULATOR ~36

$B_{j1}$ ($f_{j1}$)

12$A_N$

$B_{jN}$ ($f_{jN}$)

12$A_1$ ~

$f_{j1}$

$\otimes$ ~13$A_1$

...

$f_{jN}$

$\otimes$ ~13$A_N$

$B_{j1}$

$B_{jN}$

# FIG.9

1F

CARRIER
LIGHT
SOURCE
($\lambda_0$)

$f_0$ ~15

16A

CARRIER
LIGHT
$E_0(\lambda_0)$

18

OPTICAL
FIBER

~2

MODULATED
CARRIER
LIGHT
$E_0'(\lambda_0)$

OPTICAL
PHASE
MODULATOR

14

SUBCARRIER SIGNAL
LIGHT
$E_{sj}(\lambda_{Sj}, P_{Sj})$

THIRD
OPTICAL
MODULATOR

~17

INFORMATION
SIGNAL ($B_j$)

SUBCARRIER
MODULATED SIGNAL
$B_j(f_j)$

~13

$f_j$ ~12

# FIG.10

# FIG.11

EP 2 738 957 A1

# FIG.12

4A

$E_0'$ → [41] → [42] → | FILTER 43 | → | DEMODULATION CIRCUIT 44 | → $\Sigma B_j$

# FIG.13

4B

$E_0'$ → [46] → [41] → [42] → | FILTER 43 ($f_{if}$) | → | DEMODULATION CIRCUIT 44 | → $\Sigma B_j$

[45]

# FIG.14

4C

$E_0'$ → | 41 | → | 42 | → | 43A FIRST BPF | →

| 48 SECOND BPF |

⊗ 49

| 44 DEMODULATION CIRCUIT | → Σ B$_j$

# FIG.15

1G

INPUT MODULATED CARRIER LIGHT $E_0'$ ($\lambda_0$)

NONLINEAR FIBER

FIRST WDM COUPLER

SECOND WDM COUPLER

OUTPUT MODULATED CARRIER LIGHT $E_0'$ ($\lambda_0$)

... → | 71 | → ( 72 ) → | 73 | → ...

$E_{sj}$ ($\lambda_{sj}$)

CARRIER LIGHT INFORMATION

| 79 OPTICAL POWER CONTROLLER |

| 78 POLARIZATION CONTROLLER |

| 77 FIFTH SIGNAL LIGHT SOURCE |

| 76 CONTROL CIRCUIT |

| 75 COMPARATOR CIRCUIT |

| 74 MONITORING CIRCUIT |

$E_{sj}$ ($\lambda_{sj}$, $f_j$)

# FIG.16

500

CARRIER
LIGHT
$E_{01} (\lambda_0)$

501
OPTICAL
MODULATOR

MODULATED
CARRIER LIGHT
$E_{01}' (\lambda_0)$

510

510

SUBCARRIER MODULATED
SIGNAL $S_j (f_j)$

INFORMATION
SIGNAL $(B_j)$

503

$f_j$ 502

# FIG.17

$E_{01}$

$\lambda_0$

(A)

$E_{01}$

-j    j

$\lambda_0$

(B)

Europäisches
Patentamt

European
Patent Office

Office européen
des brevets

## EUROPEAN SEARCH REPORT

Application Number

EP 13 18 4733

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 367 050 A1 (FUJITSU LTD [JP]) 21 September 2011 (2011-09-21) * the whole document * | 1-10 | INV. H04B10/50 H04B10/516 |
| X<br>A | US 2010/104294 A1 (CHEN JYE HONG [TW] ET AL) 29 April 2010 (2010-04-29) * paragraph [0022] - paragraph [0024] * * page 1; figure 1 * | 1,10<br>2-9 | |
| X | EP 0 877 495 A2 (MATSUSHITA ELECTRIC IND CO LTD [JP]) 11 November 1998 (1998-11-11) * page 15, line 54 - page 16, line 12 * * figures 3-5 * | 1,10 | |
| A | EP 1 408 631 A2 (MITSUBISHI ELECTRIC CORP [JP]) 14 April 2004 (2004-04-14) * abstract * * figure 1 * | 1-10 | |

TECHNICAL FIELDS
SEARCHED       (IPC)

H04B

The present search report has been drawn up for all claims

| Place of search | Date of completion of the search | Examiner |
|---|---|---|
| Munich | 6 March 2014 | Ribbe, Åsa |

EPO FORM 1503 03.82 (P04C01)

**ANNEX TO THE EUROPEAN SEARCH REPORT
ON EUROPEAN PATENT APPLICATION NO.**

EP 13 18 4733

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2014

| Patent document cited in search report | | | Publication date | Patent family member(s) | | | Publication date |
|---|---|---|---|---|---|---|---|
| EP 2367050 | | A1 | 21-09-2011 | EP<br>JP<br>US | 2367050<br>2011215603<br>2011229138 | A1<br>A<br>A1 | 21-09-2011<br>27-10-2011<br>22-09-2011 |
| US 2010104294 | | A1 | 29-04-2010 | TW<br>US | 201017245<br>2010104294 | A<br>A1 | 01-05-2010<br>29-04-2010 |
| EP 0877495 | | A2 | 11-11-1998 | DE<br>EP<br>US<br>US | 69836111<br>0877495<br>6459519<br>2003030868 | T2<br>A2<br>B1<br>A1 | 16-05-2007<br>11-11-1998<br>01-10-2002<br>13-02-2003 |
| EP 1408631 | | A2 | 14-04-2004 | EP<br>JP<br>JP<br>US | 1408631<br>4110913<br>2004135139<br>2004071474 | A2<br>B2<br>A<br>A1 | 14-04-2004<br>02-07-2008<br>30-04-2004<br>15-04-2004 |

For more details about this annex : see Official Journal of the European Patent Office, No. 12/82

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011052075 A
- JP 2011215603 A